# EUROPÄISCHE PATENTSCHRIFT

(11) **EP 4 351 323 B1**
(45) Veröffentlichungstag und Bekanntmachung des Hinweises auf die Patenterteilung: **06.08.2025**
(21) Anmeldenummer: 22732236.9
(22) Anmeldetag: 09.06.2022
(51) Int. Cl.: A01J 5/08

(54) **ELASTISCHER MELKBECHEREINSATZ**
ELASTIC TEAT CUP LINER
MANCHON ELASTIQUE POUR GOBELET TRAYEUR

(30) Priorität: 11.06.2021 DE 102021115078
(43) Veröffentlichungstag der Anmeldung: 17.04.2024
(73) Patentinhaber: Jakob Maier Und Wilfried Hatzack Erfinder Gbr, 86842 Türkheim (DE)
(72) Erfinder: HATZACK, Wilfried, 86842 Türkheim (DE); MAIER, Jakob, 86842 Türkheim (DE)
(74) Vertreter: Grünecker Patent- und Rechtsanwälte PartG mbB
(86) Internationale Anmeldenummer: PCT/EP2022/065736
(87) Internationale Veröffentlichungsnummer: WO 2022/258771

(56) Entgegenhaltungen:
- US-A- 3 308 788
- US-A- 4 059 070

## Beschreibung

Die vorliegende Erfindung betrifft im Allgemeinen die Melktechnik zum Gewinnen von Milch von Milchtieren und betrifft insbesondere die "Schnittstelle" zwischen Tier und Maschine beim automatisierten oder semi-automatisierten Melken in Form eines Zitzengummis bzw. eines elastischen Melkbechereinsatzes, der beim Melken mit der Zitze des Tieres in Kontakt tritt.

In der heutigen Agrarindustrie erfolgt das Gewinnen von Milch von Milchtieren in der Regel in vollautomatisierten oder semi-automatisierten Anlagen, die prinzipiell so gestaltet sind, dass typischerweise an jede einzelne Zitze des Milchtieres ein Melkbecher angesetzt wird, um damit temporär einen Strömungskanal zwischen der Zitze und einem Milchauffangbehälter herzustellen. Der eigentliche Kontakt zwischen der Zitze des Tieres, die ein komplexes und empfindliches biologisches System für das Säugen eines Kalbes darstellt, erfolgt durch eine in die Melkbecherhülse eingesetzte Komponente, die typischerweise als Zitzengummi und hierin im Weiteren als elastischer Melkbechereinsatz bezeichnet wird.

Der elastische Melkbechereinsatz, der aus Kautschuk oder Polymermaterial, etwa Silikon, hergestellt ist, hat beim Melkvorgang zunächst die Aufgabe, mit der Zitze des Milchtieres in Kontakt zu treten und während des Melkvorgangs durch Haftreibung und Einwirkung des unter der Zitze vorherrschenden, durch den elastischen Melkbechereinsatz übertragenen Betriebsvakuums an der Zitze zu haften. Durch den an der Zitze haftenden elastischen Melkbechereinsatz wird ein Strömungskanal erzeugt, über den die aus der Zitze austretende Milch durch das Innere des Melkbechereinsatzes abgeleitetet wird und letztlich in ein Leitungssystem und einen Vorratsbehälter geführt wird. Dazu weist der elastischen Melkbechereinsatz typischerweise einen Kopfbereich auf, der zum einen so ausgelegt ist, dass damit eine mechanische Befestigung an der Melkbecherhülse ermöglicht wird, und andererseits eine entsprechende Öffnung und Kontaktflächen bereitgestellt werden, um damit das Einführen der Zitze in den elastischen Melkbechereinsatz zu ermöglichen. An den Kopfbereich schließt sich ein Schlauchbereich mit einer gewissen Länge an, die durch den speziellen Anwendungszweck und die zum maschinellen Melken verwendete Anlage gegeben ist.

Wenn die Zitze des Milchtieres in ausreichender Weise in die Öffnung im Kopfbereich des elastischen Melkbechereinsatzes eingeführt ist und der Melkbechereinsatz an der Zitze haftet, liegt auch ein Teil der Innenwand des Schlauchbereichs an der Zitze an und trägt somit zu einem relativ dichten Kontakt zwischen Zitze und Melkbechereinsatz bei.

Beim automatisierten Melken hat sich eine Technik durchgesetzt, wonach in einem Raumbereich des Melkbechers, der durch die Melkbecherhülse und die Außenwand des elastischen Melkbechereinsatzes ausgebildet ist, periodisch Druckunterschiede erzeugt werden. Es wird dadurch bei erhöhtem Druck in diesem Raumbereich, der etwa ungefähr gleich dem Atmosphärendruck ist, ein "Einfalten" des entsprechenden Abschnitts des Schlauchbereichs bewirkt, wodurch der Strömungskanal in der Zitze und in dem Melkbechereinsatz mehr oder minder unterbrochen wird und gleichzeitig durch das Andrücken des elastisch verformten Abschnitts des Schlauchbereichs an die Zitze eine entsprechende massierende Wirkung an der Zitze erreicht wird. Dieser Abschnitt des Melkvorgangs wird häufig als Entlastungsphase bezeichnet. Wenn andererseits ein Unterdruck in dem Raumbereich, der durch die Melkbecherhülse und die Außenwand des elastischen Melkbechereinsatzes gebildet ist, vorhanden ist, der beispielsweise in etwa dem unter der Zitze ständig vorherrschenden Unterdruck entspricht, dann "entfaltet" sich der entsprechende Abschnitt des Schlauchbereichs durch die Eigenelastizität des Melkbechereinsatzes und gibt den Strömungskanal in und unter der Zitze wieder frei, sodass aufgrund der Saugwirkung Milch aus der Zitze austreten kann. Dieser Abschnitt des Melkvorgangs wird typischerweise als Saugphase bezeichnet.

Die Größenordnung für die Dauer einer einzelnen Saugphase und einer sich anschließenden Entlastungsphase liegt im Bereich von 1 Sekunde, wobei typischerweise der Anteil der Saugphase auf Kosten der Entlastungsphase einstellbar ist und eine entsprechende Variabilität des Verhältnisses von Saugphase zu Entlastungsphase häufig dynamisch gesteuert wird.

Zu Beginn eines Melkvorganges sind die Melkbecher an die einzelnen Zitzen des Milchtieres anzusetzen, wobei dies typischerweise automatisch, wenn ein Melkroboter Verwendung findet, oder manuell erfolgt. Beim Ansetzen des Melkbechers an eine Zitze wird die Zitze in den elastischen Melkbechereinsatz durch die Öffnung in seinem Kopfbereich eingeführt, indem der Melkbecher im Wesentlichen in Längsrichtung der Zitze auf diese aufgeschoben wird, sodass zunächst der Rand der Öffnung mit der Zitze in Kontakt tritt und dabei verformt wird und schließlich ein Kontakt mit der Innenwand des Schlauchbereichs entsteht, der zu einem mehr oder minder dichten Kontakt zwischen Innenwand des entsprechenden Abschnitts des Schlauchbereichs und der Zitze sorgt. Dieses dichte Abschließen der Kontaktflächen zwischen Zitze und Melkbechereinsatz führt durch das im Innenbereich des elastischen Melkbechereinsatzes vorherrschende "Melkvakuum" bzw. der entsprechende Unterdruck im Zusammenwirken mit der Haftreibung der mit der Zitze im Kontakt befindlichen Oberflächen des Melkbechereinsatzes zum Anhaften des Melkbechers. Die Länge des Abschnitts der Zitze, mit der die Zitze letztlich in den elastischen Melkbechereinsatz eindringt, hängt dabei von dem Durchmesser der Öffnung und von den anatomischen Gegebenheiten der entsprechenden Zitze ab.

Dabei ist zu berücksichtigen, dass sich während des Melkvorgangs die Zitze typischerweise verändert, sodass je nach Phase des Melkvorgangs unterschiedliche anatomische Bedingungen für den Kontakt zwischen Melkbecher und Zitze vorliegen.

Beispielsweise kann es während des Melkvorgangs in einer fortgeschrittenen Phase zu einer gewissen "Erschlaffung" der Zitze kommen, sodass aufgrund des ständig unter der Zitze anliegenden Unterdrucks ein größerer Anteil der Zitze in den Melkbechereinsatz "eingesaugt" wird, was dadurch in Erscheinung tritt, dass der Melkbecher an der Zitze "hoch klettert". Durch diese geänderte Stellung des Melkbechers kann es jedoch zu einer Druckbeaufschlagung von Gefäßen im oberen Bereich der Zitze und in der Nähe des Euterbodens kommen, die eine nachteilige Wirkung auf das Tier ausüben und somit gegebenenfalls zu erhöhter Unruhe und folglich der Gefahr eines frühzeitigen Abbruchs des Melkvorgangs und damit einem unvollständigen Ausmelken führen können.

Diesbezüglich beschreibt die Druckschrift DE 1 782 263 einen Melkbechereinsatz, in welchem am Rand der Öffnung entsprechende Vorsprünge in Form von Erhebungen vorgesehen sind, die im gespannten Zustand verstärkt auf die Zitzenwand einwirken, diese entsprechend verformen und damit einen verstärkten Kontakt zur Zitze herstellen, sodass das "Absinken" der Zitze bzw. das "Hochklettern" des Melkbechers während jedes Saug-/Entlastungszyklus verhindert werden soll.

US4059070A offenbart einen Melkbechereinsatz, bei dem der innere Umfang des Ringbereichs aus einer Reihe von aneinandergrenzenden Wellenformen gebildet ist.

Die Druckschrift US 1 260 466 A beschreibt einen Melkbechereinsatz, der durch das Vorsehen von elastischen Elementen an einem Ring über der Öffnung des Melkbechereinsatzes beim Einführen der Zitze durch Verformung einen innigen Kontakt zur Zitzenwand herstellt, sodass durch die elastische Verformung der Elemente nach unten und außen der Melkbecher an der gewünschten Position gehalten wird. Andererseits lässt sich die Haftung der elastischen Elemente an der Zitze aufheben oder zumindest deutlich reduzieren, wenn eine Drehung des Melkbechers erfolgt, sodass der Melkbecher in diesem gedrehten Zustand leicht von der Zitze manuell abgenommen werden kann.

Ferner kann während gewisser Phasen im Melkvorgang ein über den ursprünglich angelegtem Betriebsunterdruck hinausreichender Unterdruck unmittelbar unter der Zitze hervorgerufen werden, etwa wenn Milch, die während der Saugphase ermolken wird, rasch abgeführt wird, sodass zwischen Zitze und der sich wegbewegenden Milchsäule eine Unterdruckspitze hervorgerufen wird.

In diesem Zusammenhang sei angemerkt, dass im Rahmen dieser Anmeldung eine "Vergrößerung bzw. Erhöhung" des Wertes des Unterdrucks so zu verstehen ist, dass die Druckdifferenz zwischen dem Druck unter der Zitze und einem Referenzdruck, beispielsweise dem umgebenden Atmosphärendruck, größer wird. Ein höherer Wert des Unterdrucks, etwa eine "Unterdruckspitze", zeigt also an, dass der Druck absolut gesehen geringer und damit die Differenz zum Referenzdruck größer wird.

In diesem Zusammenhang beschreibt die Druckschrift US 2 340 295 einen Melkbechereinsatz, der an einer obersten nahezu horizontalen Fläche seines Kopfes eine Oberflächenstruktur aufweist, etwa in Form von kleinen radial verlaufenden Kanälen oder Rippen. Diese strukturierte Oberfläche soll im Zusammenwirken mit der Oberfläche des Euterbodens einen relativ dichten Verschluss bilden, wobei jedoch am Ende der Saugphase schließlich durch die Struktur kleine Lufteinlasskanäle hervorgerufen werden sollen, sodass eine geringe Luftmenge am Euterboden entlang zu den Zitzen eindringen kann, wodurch der Unterdruck unter der Zitze reduziert werden soll, um damit insgesamt ein verbessertes, dem natürlichen Saugen des Kalbes angepasstes Melken zu erreichen.

Die Druckschrift US 3 308 788 beschreibt ein System, das aus einem Melkbecher mit Einsatz und einer dazu separaten Platte besteht, wobei die Platte eine Öffnung aufweist, deren Durchmesser kleiner ist als der Durchmesser der Öffnung des Melkbechereinsatzes. Die Platte wird auf den Melkbechereinsatz aufgelegt oder entsprechend eingepasst und enthält elastische Elemente, die einen guten mechanischen Kontakt zur Zitze herstellen und gleichzeitig den Einlass einer geringen Menge von Außenluft entlang der Zitzenwände ermöglichen. Dadurch soll die Haftung erhöht werden, wenn der Unterdruck unter der Zitze durch die eingeführte Luftmenge verringert wird. Auf diese Weise soll ein Verschluss der Zitze nach Entleerung der jeweiligen Euterzisterne erreicht werden, sodass ein Eindringen von kontaminierter Luft und von Milch in die Euterzisterne verhindert wird. Der Ring kann dabei so beschaffen sein, dass er auch in Verbindung mit herkömmlichen Melkbechereinsätzen verwendbar ist.

Es gibt unterschiedliche Durchmesser für die Öffnungen der elastischen Melkbechereinsätze, um damit anatomisch unterschiedlichen Bedingungen, etwa Länge, Durchmesser, und dergleichen der Zitze des Milchtieres Rechnung zu tragen. Im praktischen Betrieb ist es jedoch kaum zu vermeiden, dass ein spezieller Melkbechereinsatz für viele unterschiedlich große Zitzen der Milchtiere zu verwenden ist. Es ist daher von großer Wichtigkeit, insbesondere den Kopfbereich in der Umgebung der Öffnung zum Einführen der Zitzen in Verbindung mit dem angrenzenden Schlauchbereich so zu gestalten, dass ein rasches Ansetzen, automatisiert oder manuell, möglich ist, wobei ein zuverlässiges Anhaften schon beim ersten Ansetzversuch erreicht werden soll. Weiterhin soll der Kontakt zwischen Melkbecher und Zitze während des Melkens möglichst zuverlässig erhalten bleiben, um ein vorzeitiges Abfallen des Melkbechers mit den damit einhergehenden Nachteilen zu vermeiden.

Es wurden und werden daher große Anstrengungen unternommen, um einen effizienten Melkvorgang realisieren zu können, wobei insbesondere für die zuvor genannte Problematik der Unterdruckspitzen Lösungen vorgeschlagen werden, wonach beispielsweise zu gewissen Phasen oder kontinuierlich durch entsprechend ausgebildete Ventilelemente oder Düsenelemente Atmosphärenluft dosiert im Kopfbereich des Zitzengummis und/oder direkt unter der Zitze eingebracht wird, um entsprechende Unterdruckspitzen zuminderst zu reduzieren. Auch in den zuvor genannten Druckschriften sind Lösungen beschrieben, in denen regelmäßig kleine Luftmengen eingelassen werden. Typischerweise sind diese Maßnahmen, wenn sie mit zusätzlichen Ventilen oder Plattenanordnungen einhergehen, mit aufwendigen technischen Modifizierungen verknüpft, die somit zur größeren Komplexität und damit höheren Fehleranfälligkeit sowie auch zu einem höheren Aufwand bei Reinigung und Wartung beitragen bzw. nachteilige Wirkungen bei Versagen dieser Vorrichtungen hervorrufen können.

Im Hinblick auf die zuvor genannte Sachlage ist es eine Aufgabe der vorliegenden Erfindung, Mittel anzugeben, wonach eines oder mehrere der oben genannten Probleme vermieden oder zumindest in ihrer Auswirkung reduziert werden können.

Die zuvor genannte Aufgabe wird erfindungsgemäß gelöst gemäß Anspruch 1 durch einen elastischen Melkbechereinsatz, der zur Aufnahme einer Zitze dient. Der elastische Melkbechereinsatz weist einen Schlauchbereich, einen in Längsrichtung des Schlauchbereichs angrenzenden Kopfbereich, der zur Befestigung an einer Melkbecherhülse ausgebildet und mit einer Zitzeneinführöffnung versehen ist, und einen die Zitzeneinführöffnung begrenzenden, in der Betriebsstellung als Zitzenkontaktfläche wirkenden Ringbereich auf, der entlang des Umfangs der Zitzeneinführöffnung eine wellenartige Struktur mit einer dem Schlauchbereich zugewandten Unterseite und einer von dem Schlauchbereich abgewandten Oberseite aufweist. Der Schlauchbereich, der Kopfbereich und der Ringbereich einschließlich der wellenartigen Struktur sind in Form eines einzigen Materialstücks ausgebildet. Ein Wellenberg der wellenartigen Struktur enthält einen Wellenbergabschnitt in Umfangsrichtung der Zitzeneinführöffnung, an dem die Unterseite des Wellenbergabschnitts einen maximalen Abstand zu dem Schlauchbereich hat, und ein Wellental der wellenartigen Struktur enthält einen Wellentalabschnitt, an dem die Unterseite des Wellentalabschnitts einen von dem maximalen Abstand verschiedenen minimalen Abstand zu dem Schlauchbereich hat, wobei der Wellenbergabschnitt und der Wellentalabschnitt unterschiedliche Wandstärken haben.

Der erfindungsgemäße Melkbechereinsatz weist somit insbesondere die wellenartige Struktur auf, die der Zitzeneinführöffnung ein höheres Maß an Anpassbarkeit an eine einzuführende Zitze verleiht. Diese verbesserte Anpassbarkeit, d.h., Verformbarkeit, bewirkt unmittelbar beim Ansetzen des Melkbechers an der Zitze, als auch während des gesamten Melkvorgangs ein intensiveres Anhaften des Melkbechereinsatzes, ohne dabei jedoch biologisch nachteilige Wirkungen zu entfalten.

Insbesondere wird durch den erfindungsgemäßen Melkbechereinsatz die Möglichkeit geschaffen, mit einem gegebenen Durchmesser der Zitzeneinführöffnung einen größeren Anteil an Milchtieren einer Herde zu melken, da ein ausgewählter Durchmesser der Zitzeneinführöffnung des erfindungsgemäßen Melkbechereinsatzes ein zuverlässigeres und tierschonenderes Melken für einen größeren Bereich an unterschiedlichen Zitzengrößen im Vergleich zu konventionell gestalteten Melkbechereinsätzen gewährleistet. Die wellenartige Struktur, die den Rand der Zitzeneinführöffnung bildet und von dort radial nach außen verläuft, hat die Funktion eines "Balges" der sein "Länge", und damit auch den Durchmesser der Zitzeneinführöffnung, verändern kann. D.h., wenn die Zitzeneinführöffnung auf eine Zitze aufgeschoben wird, dehnt sich die wellenartige Struktur in Umfangsrichtung der Öffnung mehr oder weniger in Anhängigkeit des Zitzendurchmessers aus. Die Wellenberge, die dabei hauptsächlich bei Verformung des Ringbereichs nach unten und nach außen mit der Zitzenwand in Kontakt treten, sorgen dabei stets für eine ausreichende Haftung an der Zitze. Aufgrund der oben beschriebenen balgartigen Struktur wird somit für Zitzen mit kleinerem Durchmesser und auch für Zitzen mit größerem Durchmesser die geeignete Position des Melkbechereinsatzes in Längsrichtung im zentralen Bereich der Zitze liegen, ohne die Gefahr eines Melkbecherabfalls hervorzurufen.

Typischerweise ist es entsprechend aufwendig, den unterschiedlichen Anforderungen einer Herde aus Milchtieren im täglichen Betrieb gerecht zu werden. Wenn beispielsweise Tiere mit relativ kleinen Zitzen in der zu melkenden Herde vorhanden sind, so müssen gegebenenfalls ein oder mehrere Melkplätze für diese Tiere reserviert werden, um dort entsprechend Melkgeschirre mit geeigneten Durchmessern der Melkbechereinsätze vorzuhalten. Dies ist in der Praxis relativ aufwendig, insbesondere wenn diese Art der "Selektion" bei kleinen oder mittleren Betrieben ausgeführt werden soll. Aber auch bei großen Agrarbetrieben, führt eine entsprechende Selektion der Milchtiere in Bezug auf die Zitzengröße und das Vorhalten entsprechender Melkstände mit Melkbechereinsätzen mit unterschiedlichen Durchmessern der Zitzeneinführöffnungen zu einem hohen Aufwand. Häufig wird daher, insbesondere in kleineren und mittleren Betrieben, der Melkvorgang mit einem "Kompromiss-" Zitzengummi durchgeführt, wobei der Durchmesser für die Zitzengummiöffnungen so ausgewählt ist, dass damit die Mehrzahl der Milchtiere der Herde relativ effizient gemolken werden kann. Allerdings kann diese Vorgehensweise bei Milchtieren mit größeren, also für den ausgewählten Öffnungsdurchmesser zu großen Zitzen, typischerweise zu einem Stau in den Gefäßen der Zitze führen, wodurch sich entsprechende nachteilige Wirkungen auf die Zitze und somit auf den Ertrag, sowohl kurzfristig als auch langfristig, ergeben können. Andererseits kommt es bei Tieren mit zu kleinen Zitzen im Vergleich zu dem "Kompromiss"-Zitzengummi nur zu einer geringen Haftung, wodurch die Gefahr eines Melkbecherabfalls während des Melkvorgangs besteht und somit eine Unterbrechung des Melkvorgangs herbeigeführt wird. Dies führt zu zusätzlichem Aufwand durch erneutes Anlegen der Melkbecher und typischerweise zu einer Verlängerung des Melkvorgangs. Ein Melkbecherabfall kann auch ein unvollständiges Ausmelken eines(r) oder mehrerer Euterviertel/hälfte(n) nach sich ziehen. Wie zuvor erläutert, ist es durch den erfindungsgemäßen Melkbechereinsatz aufgrund der deutlich größeren Spanne von Zitzen, die durch eine einzelne ausgewählte Öffnungsgröße aufgrund der wellenartigen Struktur in zuverlässiger und tierschonender Weise gemolken werden können, jedoch möglich, den Aufwand bezüglich einer Anpassung der Zitzengummiwahl sowie mögliche Beeinträchtigungen aufgrund nicht optimaler Anpassung von Zitze zu Öffnungsdurchmesser gering zu halten. D. h., der erfindungsgemäße Melkbechereinsatz ist toleranter in Bezug auf Zitzengrößenschwankungen im Vergleich zu konventionell gestalteten Zitzengummis.

Es ist anzumerken, dass eine wellenartige Struktur im Sinne der vorliegenden Anmeldung als eine Struktur zu verstehen ist, in der entlang einer Umfangsrichtung der Zitzeneinführöffnung abwechselnd Erhebungen, d.h., Materialabschnitte mit Oberseite und Unterseite, und Einsenkungen, d.h., Materialabschnitte mit Oberseite und Unterseite, auftreten, die entsprechend als Wellenberge und Wellentäler bezeichnet sind. Dabei ist ein Wellenberg als eine "Erhebung" in dem Sinne zu verstehen, dass in Längsrichtung des Melkbechereinsatzes, etwa in Bezug auf eine gedachte Mittelachse des Melkbechereinsatzes, der Kopfbereich "oben" liegt und der Schlauchbereich in Längsrichtung hinter dem Kopfbereich und damit "unter" dem Kopfbereich liegt. Ein Wellenberg ist somit ein Abschnitt in Umfangsrichtung der Zitzeneinführöffnung, der einen Wellenbergabschnitt enthält, an dem die Unterseite, d.h., die dem Schlauchbereich zugewandte Seite des Abschnitts, einen maximalen Abstand zu dem Schlauchbereich hat, und ein Wellental ist ein Abschnitt in Umfangsrichtung der Zitzeneinführöffnung, der einen Wellentalabschnitt enthält, an dem die Unterseite einen minimalen Abstand zu dem Schlauchbereich hat, wobei der minimale Abstand kleiner ist als der maximale Abstand. Anders ausgedrückt, in einer Seitenansicht sind Wellenberg und Wellental als "schlangenlinienförmige" Anordnung zu verstehen, die somit eine balgartige Struktur zur elastischen Verlängerung des Umfangs der Öffnung bildet, wobei in einem Ruhezustand, also ohne eingeführte Zitze, die "Schlangenlinie" der wellenartigen Struktur, d.h., die Erstreckung in Umfangsrichtung der Öffnung, ihre minimale Länge oder Erstreckung hat. Die Wellenberge und Wellentäler sind also in Längsrichtung zueinander "ausgelenkt". Ferner ist eine wellenartige Struktur im hierin verwendeten Sinne als eine Struktur zu verstehen, bei der die Wellenberge und/oder die Wellentäler in der zuvor beschriebenen Seitenansicht, also die "Schlangenlinie oder Balgform" in einer Ansicht senkrecht zur Längsrichtung, eine beliebige Gestalt haben können, etwa in Form von Kreisbögen, einer Kombination aus Kreisbögen mit unterschiedlichen Radien, möglicherweise in Verbindung mit geraden Abschnitten, und dergleichen. Beispielsweise sind die Wellenberge und/oder die Wellentäler in Seitenansicht als verrundete Formen, als Quadrate, Rechtecke, Dreiecke, oder dergleichen ausgebildet. Die dadurch erzeugte Linienform wird daher weiterhin als schlangenlinienförmig bezeichnet. In bevorzugten Ausführungsformen sind die Seitenansichtsformen der Wellenberge und Wellentäler verrundet, sodass keine ausgeprägten Kanten vorhanden sind.

Durch die wellenartige Struktur ergibt sich beispielsweise beim Ansetzen des Melkbechers an der Zitze des Milchtieres eine entsprechend mit geringerem Kraftaufwand erfolgende Verformbarkeit insbesondere des Ringbereichs, in welchem die wellenartige Struktur angrenzend zur Zitzeneinführöffnung ausgebildet ist, sodass die Zitze relativ ungehindert in die Öffnung eintreten kann. Zugleich kann sie mit den entsprechenden Wellenbergen in Kontakt treten, sodass sich nach Erreichen einer gewissen Eindringtiefe der Zitze ein stabiler mechanischer Kontakt zwischen dem Melkbechereinsatz und der Zitze in ihrem oberen Bereich ergibt und damit auch im Zusammenwirken mit dem anliegenden Wandbereich des Schlauchbereichs ein nahezu luftdichter Abschluss ermöglicht wird, wodurch der Melkbecher sich zuverlässig an der Zitze festsaugt und damit anhaftet. D. h., durch diese erhöhte Flexibilität bei der Verformung des Ringbereichs am Rand der Zitzeneinführöffnung wird eine mechanische Krafteinwirkung auf die Zitze und damit generell der Kraftaufwand zum Einführen der Zitze in die Zitzeneinführöffnung reduziert, während gleichzeitig ein intensiverer Kontakt zwischen Zitze und Melkbechereinsatz gewährleistet ist. Damit ergeben sich bereits beim Ansetzen des Melkbechers im Vergleich zu konventionellen Melkbechereinsätzen verbesserte Bedingungen sowohl für den Bediener oder den Melkroboter, als auch für das Tier, da die Beanspruchung der Zitze reduziert wird. Insbesondere bei der Verwendung des erfindungsgemäßen Melkbechereinsatzes in Verbindung mit einem Melkroboter wird die Quote der Ansetzversuche, die für ein letztlich erfolgreiches Ansetzen erforderlich ist, aber auch die Anzahl der fehlgeschlagenen Ansetzaktionen reduziert. Damit lässt sich der Durchsatz des Melkroboters, also die Anzahl der Melkungen pro Zeiteinheit, erhöhen und auch die Zuverlässigkeit des Melkroboters kann gesteigert werden, da aufgrund der geringeren Anzahl an nicht erfolgreich ausgeführten Ansetzaktionen und damit der reduzierten Anzahl an nicht ausgeführten Melkvorgängen die Anzahl der manuellen Eingriffe verringert werden kann.

Auch im weiteren Verlauf des Melkvorganges, in welchem mögliche Unterdruckspitzen auftreten können, wie dies eingangs erläutert ist, ergibt die höhere Flexibilität bzw. die effizientere Verformbarkeit des Ringbereichs der Wellenstruktur in der Nähe der Zitzeneinführöffnung eine vorteilhafte Wirkung, da unter diesen Bedingungen aufgrund des Vorhandenseins der Wellentäler ein geringfügiges, durch die Eigenelastizität des Materials der wellenartigen Struktur hervorgerufenes kontrolliertes Ablösen erfolgt, sodass ein kurzzeitiger Gasaustausch zwischen dem Inneren des Melkbechereinsatzes und der umgebenden Atmosphäre erfolgt und dies zu einer Reduzierung möglicher Unterdruckspitzen beitragen kann. D. h., es ergibt sich die Wirkung eines Ventils, das beim Auftreten von Unterdruckspitzen in selbststeuernder Weise einen oder mehrere Strömungskanäle zwischen dem Innenraum und der umgebenden Atmosphäre öffnet, um somit einen Abbau der Unterdruckspitzen zu ermöglichen, ohne jedoch den Unterdruck auf einen Wert zu reduzieren, der ein Abfallen des Melkbechers hervorrufen würde. Auf diese Weise wird einerseits ein zuverlässiges Anhaften des Melkbechers auch während kritischer Abschnitte des Melkvorgangs gewährleistet, während andererseits unvorteilhafte Druckbedingungen an der Zitze vermieden bzw. deutlich reduziert werden, sodass entsprechend nachteilige Auswirkungen auf die Physiologie der Zitze vermieden oder zumindest reduziert werden. Beispielsweise wird dadurch auch das Hochklettern des Melkbechers deutlich reduziert, da bei einer Veränderung der Anatomie der Zitze während des Melkvorgangs, wie sie zuvor erläutert ist, zumindest ein Anstieg des Unterdrucks im Wesentlichen vermeidbar ist.

Die "einstückige" Gestaltungsform, in der der Kopfbereich, der Schlauchbereich und der Ringbereich mit der wellenartigen Struktur als ein einziges Materialstück ausgebildet sind, hat den Vorteil einer kostengünstigen Fertigung, bei der die strukturellen Eigenheiten, insbesondere der wellenartigen Struktur, durch konstruktive Maßnahmen, als durch die Gestalt der Gießform, mit hoher Präzision festgelegt sind. Des Weiteren ergeben sich durch die einstückige Gestaltungsform Vorteile bei der Handhabung des Melkbechereinsatzes, etwa beim Anbringen an der Melkbecherhülse, sowie im praktischen Gebrauch, etwa bei der regelmäßigen Reinigung des Melkbechers, da keine unnötigen Verbindungsstellen vorhanden sind, in denen sich Ablagerungen festsetzen können.

In einer weiteren vorteilhaften Ausführungsform ist eine radiale Erstreckung der wellenartigen Struktur in dem Ringbereich ausgehend vom Rand der Zitzeneinführöffnung zahlenmäßig größer als ein Radius der Zitzeneinführöffnung. D. h., ausgehend vom Rand der Zitzeneinführöffnung erstreckt sich die wellenartige Struktur in radialer Richtung, also in der Richtung, die senkrecht zur Umfangsrichtung und damit senkrecht zur "Ausbreitungsrichtung" der Welle ist, bis zu einer Entfernung, die zahlenmäßig größer ist als der Betrag des Radius der Zitzeneinführöffnung. Dadurch ist in noch höherem Maße gewährleistet, dass die durch die wellenartige Struktur bewirkte erhöhte Flexibilität auch beim Einführen von Zitzen mit unterschiedlichen Zitzendurchmessern gegeben ist. Dies liegt daran, dass bei einer entsprechenden Absenkung des Ringbereichs beim Einführen der Zitze die Wirkung der wellenartigen Struktur über eine weite Strecke radial auswärts, zum Rand des Kopfbereichs hin wirksam ist. Bei einer entsprechenden Skalierung des Radius der Zitzeneinführöffnung, wenn etwa Melkbechereinsätze mit sehr unterschiedlichen Zitzendurchmessern und/oder für unterschiedliche Tierarten festgelegt werden, ist damit eine hohe Flexibilität im Bereich der Öffnung stets gewährleistet und es wird die Wirkung weiter verbessert, wonach ein größerer Bereich von Zitzendurchmessern abgedeckt werden kann, wie dies auch zuvor erläutert ist.

Erfindungsgemäß haben der Wellenbergabschnitt und der Wellentalabschnitt unterschiedliche Wandstärken. Durch diese Maßnahme gelingt es, die durch die wellenartige Struktur bereits stärker ausgeprägte Flexibilität und damit Verformbarkeit in gesteuerter Weise durch konstruktive Maßnahmen, d. h., durch entsprechende Ausgestaltung einer Spritzgießform, einzustellen. D. h., die Wandstärke des Wellenbergabschnitts oder des Wellentalabschnitts wird beim Fertigungsvorgang des Melkbechereinsatzes derart festgelegt, dass die gewünschte gesteuerte Verformbarkeit erreicht wird. Dabei ist diese gesteuerte Verformbarkeit in hohem Maße über viele Produkte hinweg mit gleichbleibender Qualität herstellbar, da die Festlegung der Wandstärke während des Fertigungsvorgangs, beispielsweise während des Spritzgießens, erfolgt und dabei nur sehr geringe oder sogar minimale und gut bekannte Toleranzen auftreten.

In einer weiteren vorteilhaften Ausführungsform hat der Wellenbergabschnitt eine größere Wandstärke als der Wellentalabschnitt. Durch diese konstruktive Maßnahme wird erreicht, dass die Verformbarkeit und damit Flexibilität der Wellenstruktur entlang der Längsachse des elastischen Melkbechereinsatzes so eingestellt ist, dass ein widerstandsärmeres Aufschieben des Melkbechers auf die Zitze möglich ist, während in der entgegengesetzten Richtung durch die modifizierte Flexibilität ein erhöhter Widerstand wirkt, sodass das Anhaften nach dem Ansetzen deutlich verbessert ist.

In einer weiteren vorteilhaften Ausführungsform ist am Rand der Zitzeneinführöffnung eine Erstreckungslänge der Wellentäler größer als eine Erstreckungslänge der Wellenberge. D. h., unmittelbar am Rand der Zitzeneinführöffnung, also in Seitenansicht der Zitzeneinführöffnung, etwa von der Zitzeneinführöffnung aus betrachtet, ist die wellenartige Struktur so aufgebaut, dass die Wellenberge eine kleinere Länge besitzen und daher stärker gekrümmt sind, d. h. einen kleineren Krümmungsradius besitzen. D.h., die Erstreckung der Wellenberge entlang der Umfangsrichtung der Zitzeneinführöffnung ist kleiner als die entsprechende Erstreckung der Wellentäler, die einen größeren Krümmungsradius und damit eine geringere Krümmung haben. Dabei ist zu beachten, dass der Krümmungsradius sich entlang eines Wellenbergs oder Wellentals ändern kann, beispielsweise wenn relativ geradlinige Abschnitte vorgesehen sind, und in diesem Zusammenhang ist der Krümmungsradius als ein gemittelter Krümmungsradius für einen Wellenberg oder ein Wellental zu verstehen. Der Übergang zwischen einem Wellental und einem Wellenberg kann dabei als Wendepunkt einer gedachten Linie in der Mitte des Materials der wellenartigen Struktur verstanden werden.

Durch diesen Aufbau sind somit die Wellenberge unmittelbar an der Zitzeneinführöffnung relativ kompakt in ihrer Erstreckung in Umfangsrichtung und lassen somit Raum für deutlich ausgeprägtere Wellentäler, die daher unmittelbar an der Zitzeneinführöffnung für eine verbesserte Verformbarkeit sorgen.

In einer weiteren vorteilhaften Ausführungsform ist die Erstreckung der Wellentäler in Umfangsrichtung mit zunehmendem Abstand von der Zitzeneinführöffnung im Wesentlichen gleich bleibend. D. h., mit zunehmendem radialen Abstand von der Zitzeneinführöffnung ändert sich die Erstreckung der Wellentäler in Umfangsrichtung nicht wesentlich, ist also im wesentlichen gleichbleibend, sodass dementsprechend die Erstreckung der Wellenberge in Umfangsrichtung entsprechend zunimmt. Auf diese Weise wird gewährleistet, dass einerseits die erforderliche Verformbarkeit des Ringbereichs auch bei größerem radialen Abstand von der Zitzeneinführöffnung bewahrt wird, während andererseits die Erstreckung in Umfangsrichtung der Wellenberge zunimmt, sodass auch die Größe der wirksamen Kontaktfläche mit der Zitze bei radial größer werdendem Abstand zu der Zitzeneinführöffnung größer wird. Dadurch wird sichergestellt, dass auch bei Zitzen mit kleineren Durchmesser, bei denen die Zitze dementsprechend weiter in die Zitzeneinführöffnung einzuführen ist, eine zunehmend bessere Haftung im oberen Bereich der Zitze erreicht wird und dadurch gewährleistet ist, dass ein Anhaften bereits erfolgt, bevor der Kopfbereich am Zitzengrund, d. h. unmittelbar am Euterboden, anliegt.

In einer weiteren vorteilhaften Ausführungsform sind in der wellenartigen Struktur mindestens drei Wellentäler vorgesehen. Durch diese Mindestanzahl an Wellentäler und somit auch an Wellenbergen ergibt sich eine ausreichende Verformbarkeit, die zu den bereits dargelegten vorteilhaften Wirkungen führt. In anderen Ausführungsformen sind sechs oder mehr Wellentäler vorgesehen. Auf diese Weise kann die Wirksamkeit der wellenartigen Struktur weiter verbessert werden, da sich eine "feingliedrigere" Strukturierung ergibt, die somit effizienter an unterschiedliche Zitzengrößen, d. h. unterschiedliche Längen und Durchmesser der Zitzen, anpassbar ist.

In vorteilhaften Ausführungsformen ist der Ringbereich ausgehend vom Rand des Kopfbereichs zu der Zitzeneinführöffnung hin in Richtung zu dem Schlauchbereich geneigt. D. h., die Zitzeneinführöffnung ist in Bezug auf eine oberste Fläche des Kopfbereichs nach "unten" zurückgesetzt, d. h. in Richtung des Schlauchbereichs zurückgesetzt, wodurch sich eine bereits strukturell bessere Verformbarkeit des Ringbereichs beim Ansetzen ergibt, die die diesbezügliche Wirkung der wellenartigen Struktur weiter verstärkt.

In anderen Ausführungsformen ist eine entsprechende Neigung des Ringbereichs und damit Absenkung der Zitzeneinführöffnung nicht vorgesehen, da bereits die wellenartige Struktur selbst für die erforderliche Anpassbarkeit der Zitzeneinführöffnung in der zuvor dargestellten Weise sorgt.

In vorteilhaften Ausführungsformen ist die Zitzeneinführöffnung geeignet derart bemessen, dass darin eine Zitze eines großen Milchtieres, insbesondere eines Rindes oder eines Büffels, einführbar ist.

In anderen Ausführungsformen ist die Zitzeneinführöffnung geeignet derart bemessen, dass darin eine Zitze eines kleinen Milchtieres, insbesondere eines Schafs oder einer Ziege, einführbar ist.

Auf diese Weise ist der elastische Melkbechereinsatz auf eine große Anzahl von Zitzen unterschiedlicher Anatomie anwendbar.

Die zuvor dargestellten erfindungsgemäßen Aspekte und Ausführungsformen sowie weitere Ausführungsformen werden nun detaillierter mit Verweis auf die begleitenden Zeichnungen beschrieben, in denen:
Figur 1A schematisch eine perspektivische Darstellung eines Teils eines Melkbechereinsatzes zeigt, der einen Kopfbereich mit wellenartiger Struktur aufweist,
Figur 1B eine Draufsicht des Kopfbereichs von "oben" zeigt,
Figur 1C eine Schnittansicht durch den Teil des Melkbechereinsatzes entsprechend dem in Figur 1B gezeigten Schnitt A-A zeigt,
Figur 1D eine Schnittansicht des Kopfbereichs entsprechend dem Schnitt B-B der Figur 1B zeigt,
Figur 1E eine Draufsicht des Kopfbereichs mit einer eingezeichneten Schnittlinie zeigt, die in etwa 3/4 des Umfangs der Zitzeneinführöffnung umfasst,
Figur 1F eine Schnittansicht des Melkbechereinsatzes gemäß der in Figur 1E gezeigten Schnittlinie A-A zeigt,
Figur 2A schematisch eine perspektivische Ansicht eines weiteren Melkbechereinsatzes zeigt,
Figur 2B eine Draufsicht des Melkbechereinsatzes der Figur 2A zeigt und
Figur 2C eine Schnittansicht des Melkbechereinsatzes der Figuren 2A und 2B zeigt.

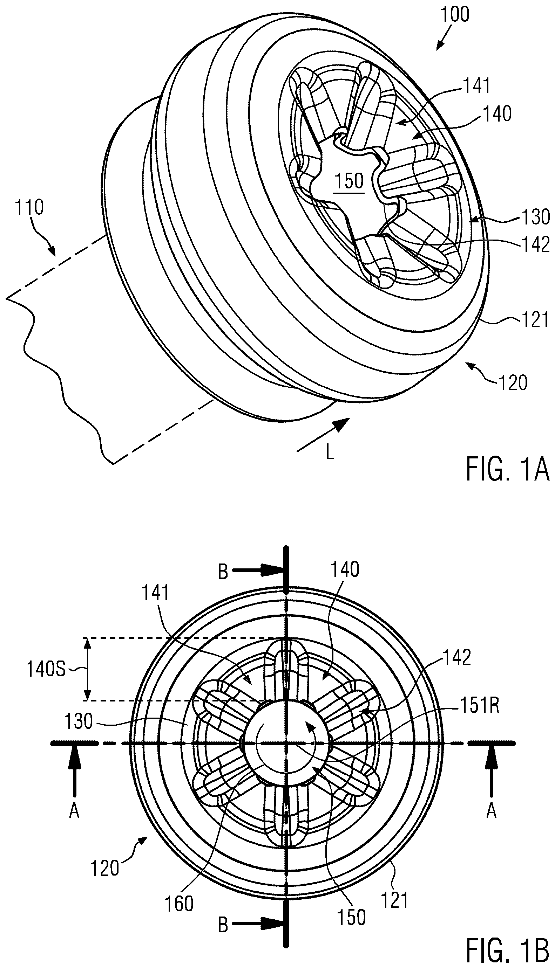

Figur 1A zeigt eine schematische perspektivische Ansicht eines Teils eines Zitzengummis bzw. eines elastischen Melkbechereinsatzes 100, der einheitlich und als ein einziges Materialstück aus einem elastischen Material, etwa Kautschuk, einem Polymermaterial, insbesondere einem Silikonmaterial, und dergleichen hergestellt ist. Der elastische Melkbechereinsatz 100 weist einen Schlauchbereich 110, der lediglich schematisch angedeutet ist, und einen Kopfbereich 120 auf. Der Schlauchbereich 110 und der Kopfbereich 120 sind in einer Längsrichtung L nacheinander angeordnet, wobei in der vorliegenden Anmeldung der Kopfbereich 120 "oben" in Bezug auf den Schlauchbereich 110 liegt.

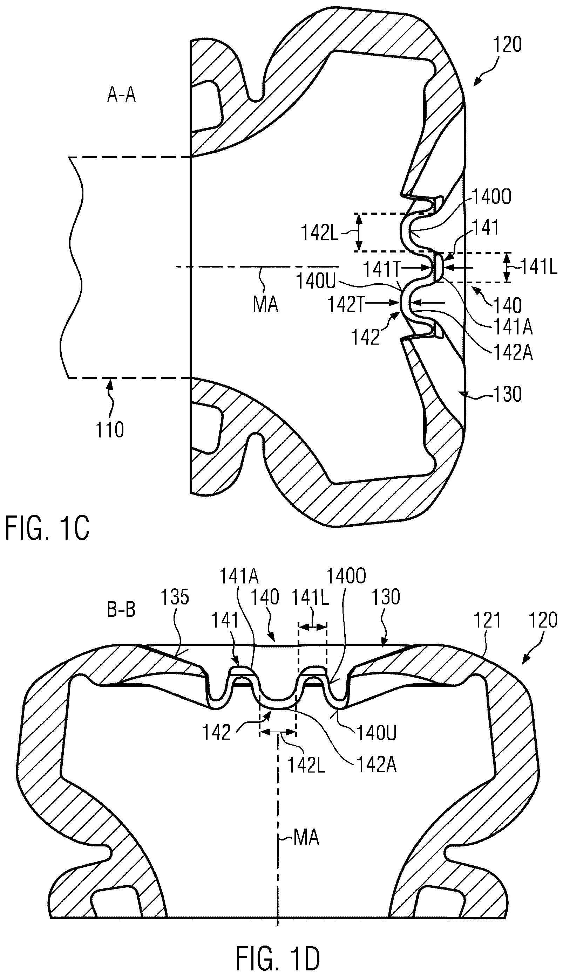

Der Kopfbereich 120 ist generell so gestaltet, dass eine mechanische Verbindung mit einer Melkbecherhülse (nicht gezeigt) ermöglicht wird, wie dies detaillierter in Verbindung mit der Figur 1C beschrieben ist. Des Weiteren weist der Kopfbereich 120 einen Rand 121 auf, der abhängig von speziellen Gegebenheiten mehr oder minder ausgebaucht ist im Vergleich zu einem unteren Teil des Kopfbereichs 120 oder im Vergleich zu dem Schlauchbereich 110. Des Weiteren ist ein ringförmiger Bereich 130, im Weiteren einfach als Ringbereich bezeichnet, vorgesehen, in dessen Zentrum eine Zitzeneinführöffnung 150 ausgebildet ist. In dem Ringbereich 130 ist ferner eine wellenförmige Struktur 140 derart ausgebildet, dass die Zitzeneinführöffnung 150 somit durch eine umlaufende wellenartige Kontur, d. h. der wellenartigen Struktur 140, begrenzt ist. D.h., die wellenartige Struktur hat eine "Wellenausbreitungsrichtung" in Form einer Schlangenlinie, die in der Umfangsrichtung der Öffnung 150 verläuft. In der Umfangsrichtung sind daher Wellenberge 141 und Wellentäler 142 jeweils abwechselnd angeordnet.

Die Größe der Zitzeneinführöffnung 150 im Ruhezustand, d.h., ohne eingeführte Zitze, beispielsweise ihr Durchmesser, ist dabei auf die anatomischen Verhältnisse einer Zitze eines zu melkenden Milchtieres abgestimmt. Beispielsweise kann der elastische Melkbechereinsatz 100 in geeigneter Weise dimensioniert sein, um relativ kleine Milchtiere, etwa Schafe, Ziegen, und dergleichen zu melken. Diesbezüglich sind die Abmessungen, etwa Länge und insbesondere Durchmesser des elastischen Melkbechereinsatzes 100 und damit auch der darin ausgebildeten Zitzeneinführöffnung 150 entsprechend festzulegen. Bei Auslegung für das Melken von größeren Milchtieren, etwa von Kühen, Büffeln, und dergleichen, die in der Regel etwas größere Zitzen besitzen, ist eine entsprechende Anpassung der Abmessungen des elastischen Melkbechereinsatzes 100 vorzunehmen. Entsprechende grundsätzliche Abmessungen für unterschiedliche Milchtiere, sowie unterschiedliche anatomische Gegebenheiten von Milchtieren der gleichen Rasse, sind hinlänglich bekannt und können entsprechend bei dem vorliegenden elastischen Melkbechereinsatz 100 Anwendung finden.

Figur 1B zeigt schematisch eine Draufsicht auf den Kopfbereich 120 des in Figur 1A gezeigten elastischen Melkbechereinsatzes 100, wobei die Zitzeneinführöffnung 150 als eine zentralliegende kreisrunde Öffnung gezeigt ist, deren Radius 151R den jeweiligen Gegebenheiten anzupassen ist, wie dies zuvor dargelegt ist. Eine zentrale kreisrunde Öffnung wird üblicherweise eingesetzt, so dass die entsprechenden Melkbechereinsätze ohne Berücksichtigung ihrer späteren Position im Melkgeschirr verwendbar sind. Im Rahmen der vorliegenden Erfindung ist es auch möglich, die allgemeine Form der Zitzeneinführöffnung 150 so zu wählen, dass von der Kreisform abgewichen wird. Beispielsweise kann der Umfang der Zitzeneinführöffnung 150 in der Draufsicht die Form eines Polygons, eines Ovals, und dergleichen haben. Wenn eine ovale Form gewählt wird, ist beim Einbau des Melkbechereinsatzes 100 in eine entsprechende Melkbecherhülse gegebenenfalls die entsprechende geeignete Winkellage zu berücksichtigen.

Des Weiteren ist in der dargestellten Ausführungsform die radiale Erstreckung der wellenartigen Struktur 140, d. h., die Kombination der Wellenberge 141 und der Wellentäler 142, so festgelegt, dass der zahlenmäßige Betrag der radialen Erstreckung der hier beispielhaft als 140S gezeigt ist, größer ist als der zahlenmäßige Betrag des Radius 151R der Zitzeneinführöffnung 150. Wie bereits zuvor erläutert ist, ist eine entsprechende Dimensionierung der radialen Erstreckung 140S der wellenartigen Struktur 140 vorteilhaft, da damit die Verformbarkeit des Ringbereichs 130 beim Einführen einer Zitze in die Öffnung 150 sehr ausgeprägt ist und damit ein zuverlässiges Anliegen der Wellenberge 141 an dem jeweiligen Zitzenabschnitt möglich ist. In anderen Ausführungsformen (nicht gezeigt) ist die radiale Erstreckung 140S zahlenmäßig kleiner als der Radius 151R der Öffnung 150, wenn ein "härteres" oder "starreres" Verhalten des Melkbechereinsatzes 100 im Bereich der Öffnung 150 gewünscht ist.

Ferner ist in der dargestellten Ausführungsform die Erstreckung der Wellentäler 142 entlang der Umfangsrichtung, die hier als 160 bezeichnet ist, so gestaltet, dass sie auch bei größerem radialen Abstand zu der Zitzeneinführöffnung 150 nahezu gleichbleibend ist. D. h., die Abmessung der Wellentäler bleibt bei zunehmendem radialen Abstand von der Öffnung 150 gleich, sodass demgemäß die Wellenberge 141 in der Draufsicht eine nahezu dreieckige Form aufweisen, wodurch mit zunehmendem radialen Abstand eine entsprechende Kontaktfläche, die durch die Oberseite der Wellenberge 141 bereitgestellt ist, größer wird. Auf diese Weise wird mit zunehmendem Eindringen einer Zitze in die Öffnung 150 und den damit einhergehenden Verformen und Nach-Unten-Falten des Ringbereichs 130 eine immer größer werdende Kontaktfläche bei gleichzeitig guter Verformbarkeit des Ringbereichs 130 geschaffen.

Figur 1C zeigt eine schematische Querschnittsansicht entlang der in Figur 1B gezeigten Schnittlinie A-A.

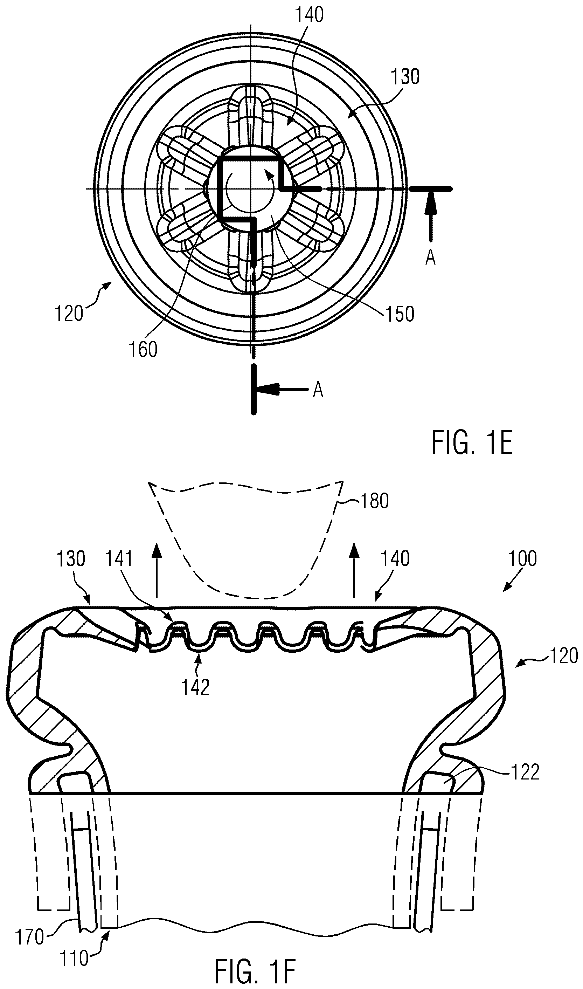

Wie in dieser Ansicht erkennbar ist, verlaufen die Auslenkungen der Wellenberge 141 und Wellentäler 142 entlang der Längsrichtung L (siehe Figur 1), oder auch in Richtung einer Mittelachse MA. Die Wellenberge 141 und die Wellentäler 142 bilden somit eine "Schlangenlinie" mit einer dem Schlauchbereich 110 zugewandten Unterseite 140U und einer von dem Schlauchbereich 110 abgewandten Oberseite 140O. Damit hat jeder Wellenberg 141 einen Wellenbergabschnitt 141A, an welchem die Unterseite 140U des Wellenbergabschnitts 141A einen maximalen axialen Abstand zu dem Schlauchbereich 110 hat. In gleicher Weise hat jedes Wellental 142 einen Wellentalabschnitt 142A, an welchem die Unterseite 140U des Wellentalabschnitts 142A einen minimalen axialen Abstand zu dem Schlauchbereich 110 hat. Der minimale Abstand ist dabei kleiner als der maximale Abstand, d.h. sowohl die Unterseite 140U als auch die Oberseite 140O verlaufen in Umfangsrichtung als Schlangenlinien. Wie bereits zuvor erläutert ist, ist die geometrische Form der Wellenberge 141 und der Wellentäler 142 in der Seitenansicht in keiner bestimmten Weise eingeschränkt, sofern sich eben erhabene Bereiche als Wellenberge 141 und eingesenkte Bereiche als Wellentäler 142 ergeben und die Unterseite 140U und die Oberseite 140A als schlangenförmige Linien erscheinen. In nicht gezeigten Ausführungsformen können die Wellenberge 141 und/oder die Wellentäler 142 mehr oder minder ausgeprägte Kanten aufweisen, sofern dies bei der Herstellung umsetzbar und für die Anwendung als geeignet erachtet wird.

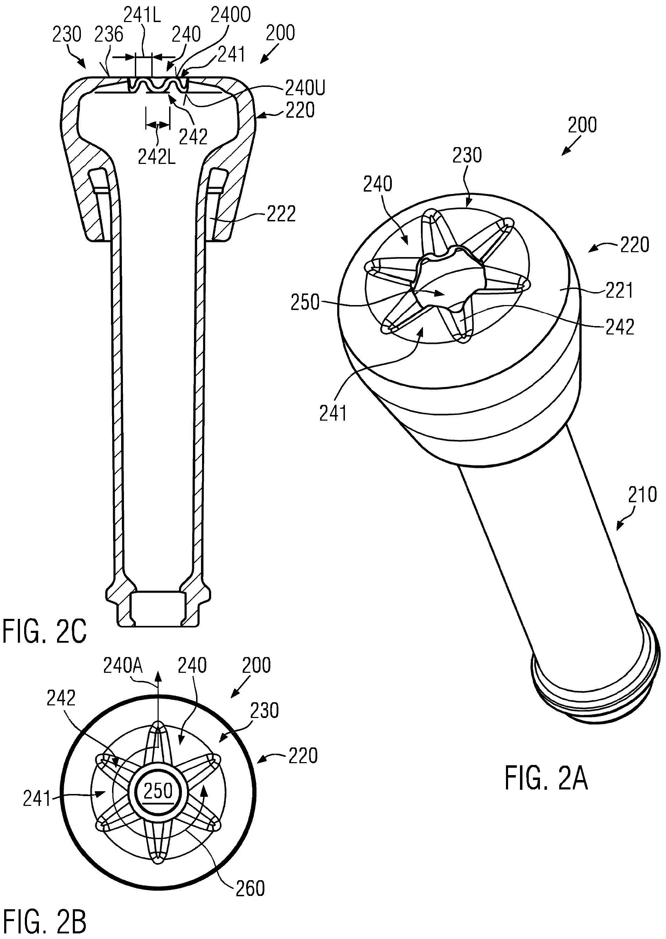

In der gezeigten Ausführungsform ist ferner eine Erstreckung 142L in Umfangsrichtung der Wellentäler 142 größer als eine entsprechende Erstreckung 141L in Umfangsrichtung der Wellenberge 141, wobei dies für den Randbereich gilt, der die Zitzeneinführöffnung 150 begrenzt, wie in Figur 2 und Figur 1 gezeigt ist. Bei zunehmendem radialen Abstand von der Öffnung 150 (siehe Figur 1 oder Figur 2) bleibt die Erstreckung 142L in Umfangsrichtung der Wellentäler 142 im Wesentlichen gleich, während die radiale Erstreckung 141L in Umfangsrichtung der Wellenberge 141 stetig zunimmt.

Für die dargestellte Ausführungsform gilt daher für den Rand der Zitzeneinführöffnung 150, dass dort entsprechend der kleinen Erstreckungslänge 141L in Umfangsrichtung ein Krümmungsradius der Wellenberge 141 relativ klein ist, während ein Krümmungsradius für die Wellentäler 142 relativ groß ist, sodass damit die größere Erstreckung in Umfangsrichtung 142L erhalten wird. D. h., am Rand der Zitzeneinführöffnung 150 ist der Krümmungsradius der Wellenberge 141 kleiner als der Krümmungsradius der Wellentäler 142. Dabei ist zu berücksichtigen, dass ein entsprechender Krümmungsradius als ein Mittelwert für einen Abschnitt des entsprechenden Wellenbergs oder Wellentals zu verstehen ist. D. h., für die entsprechende Erstreckung 142L der Wellentäler 142 ist ein mittlerer Krümmungsradius größer als ein mittlerer Krümmungsradius, der sich für die Erstreckungslänge 141L der Wellenberge 141 ergibt.

Wie zuvor im Zusammenhang mit der Draufsicht der Figur 1B erläutert ist, bleibt ein entsprechender Krümmungsradius für die Wellentäler 142 mit zunehmendem radialen Abstand von der Öffnung 150 im Wesentlichen gleich, während der entsprechende Krümmungsradius für die Wellenberge mit zunehmendem radialen Abstand von der Öffnung 150 größer wird und gegebenenfalls größer wird als der Krümmungsradius der Wellentäler bei dem betrachteten radialen Abstand zur Öffnung 150.

In anderen nicht gezeigten Ausführungsformen kann gegebenenfalls eine Zunahme oder eine Abnahme der Erstreckung in Umfangsrichtung der Wellentäler 142L vorgesehen sein, wodurch insbesondere das Verformungsverhalten durch konstruktive Maßnahmen einstellbar wird. Demgemäß ändert sich komplementär dazu die entsprechende Erstreckungslänge 141L der Wellenberge.

In der in Figur 1C dargestellten Ausführungsform ist ferner eine Wandstärke 141T zumindest im Bereich des Maximums der jeweiligen Wellenberge 141, d.h. im Wellenbergabschnitt 141A, größer als eine Wandstärke 142T der Wellentäler 142, zumindest in deren Minimum, d.h., im Wellentalabschnitt 142A.

Wie bereits zuvor erläutert ist, ermöglicht die Einstellung der Wandstärken 141T, 142T ein Steuern des Verformungsverhaltens der wellenartigen Struktur 140, da beispielsweise bei einer weiteren Vergrößerung der Wandstärke 141T die wellenartige Struktur 140 beim Kontakt mit der Oberfläche der Zitze "härter" wird. Auch kann durch die Wandstärke 141T die Steifigkeit der wellenartigen Struktur 140 eingestellt werden. Andererseits gilt für die Wandstärke 142T der Wellentäler 142, dass durch eine diesbezügliche Reduzierung die gesamte Verformbarkeit der wellenartigen Struktur 140 erhöht wird, wodurch der Durchmesser der Zitzeneinführöffnung 150 beim Einführen einer Zitze sich effizienter vergrößert.

Figur 1D zeigt schematisch eine Schnittansicht des Kopfbereichs 120 entsprechend der Schnittlinie B-B der Figur 1B. D.h., im Gegensatz zur Ansicht der Figur 1C, in der ein Wellenberg 141 zentral in Bezug zur Mittelachse MA liegt, ist in der Ansicht der Figur 1D ein Wellental 142 mittig in Bezug auf die Mittelachse MA.

Wie ferner in Figur 1D (und auch in Figur 1C, sowie Figur 1A) erkennbar ist, ist in den dargestellten Ausführungsformen der Ringbereich 130 mit einer Neigung 135 derart versehen, dass die Öffnung 150 (siehe Figur 1B) und damit der entsprechende Randbereich der wellenartigen Struktur 140, abgesenkt sind im Vergleich zu dem Rand 121 des Kopfbereichs 120. Durch diese vertiefte Anordnung der Öffnung 150 ergibt sich ein günstigeres Verhalten bei der Verformung, wenn eine Zitze in die Öffnung 150 eingeführt wird, sodass zusätzlich zu der erhöhten Flexibilität und Verformungsfähigkeit, die durch die wellenartige Struktur 140 geschaffen wird, ein weiterer Beitrag geleistet wird, wodurch der Vorgang des Einführens der Zitze, also des Ansetzens des Melkbechers, effizienter wird, während eine Herausbewegung der Zitze erschwert wird, sodass insgesamt die Haftung des Melkbechers an der Zitze während des Melkvorgangs erhöht wird.

Figur 1E zeigt eine weitere Draufsicht des Kopfbereichs 120, wobei eine Schnittlinie A-A gezeigt ist, die in etwa dreiviertel des Umfangs 160 der Zitzeneinführöffnung 150 überstreicht.

Figur 1F zeigt die entsprechende Schnittansicht entlang der Schnittlinie A-A der Figur 1E, wobei vier vollständig ausgebildete Wellentäler 142 der in dieser Ausführungsform vorgesehenen sechs Wellentäler 142 sichtbar sind. In ähnlicher Weise sind vier vollständige Wellenberge 141 der sechs Wellenberge 141 sichtbar. Die Anzahl der Wellenberge und damit Wellentäler 141, 142 kann bei der Herstellung des Melkbechereinsatzes 100 ebenfalls zur Einstellung des Verformungsverhaltens festgelegt werden. In anschaulichen Ausführungsformen sind zumindest drei Wellenberge und Wellentäler vorgesehen, während in anderen Ausführungsformen, etwa in der gezeigten, mindestens sechs Wellenberge und Wellentäler vorgesehen sind. Eine entsprechende Beschränkung der Anzahl der Wellenberge und Wellentäler ergibt sich beispielsweise durch Fertigungsbedingungen, wenn etwa bei einer hohen Anzahl an Wellenbergen und Wellentälern der Krümmungsradius der Wellenberge oder der Wellentäler an einer gegebenen radialen Position so klein wird, so dass eine korrekte Formgebung beim entsprechenden Spritzgießvorgang nicht mehr gewährleistet ist. Beispielsweise könnte bei einem zu kleinen Krümmungsradius die Einstellung der gewünschten Wandstärke gegebenenfalls nicht mehr mit der erwünschten Präzision erfolgen. Bei typischen Abmessungen für elastische Melkbechereinsätze für Ziegen, Schafe, Rinder und dergleichen lässt sich jedoch die Anzahl der Wellenberge und Wellentäler ohne Schwierigkeiten auf 8-10 erhöhen.

Ferner ist in Figur 1F ein entsprechender Einschnitt 122 gezeigt, der zur Aufnahme der Wand einer Melkbecherhülse 170 dient, so dass eine mechanische Fixierung an der Melkbecherhülse 170 und ein dichter Abschluss zu dieser erreicht wird.

Während der Verwendung des elastischen Melkbechereinsatzes 100, der zu diesem Zweck an der Melkbecherhülse 170 befestigt ist und damit einen Melkbecher bildet, der wiederum Bestandteil eines entsprechenden Satzes an Melkbechern ist, wird der Melkbecher und damit der Melkbechereinsatz 100 an eine Zitze 180 herangeführt, sodass letztlich die Zitze 180 in die Öffnung 150 eintritt. Dadurch wird der Ringbereich 130 einschließlich der wellenartigen Struktur 140 entsprechend verformt, d.h., in Längsrichtung nach "unten" gedrückt, sodass die Wellenberge 141 mit der Außenfläche der Zitze 180 in Kontakt treten. D. h., durch die elastische Verformung der wellenartigen Struktur 140 beim Einführen der Zitze 180 führt die effiziente Verformbarkeit der wellenartigen Struktur 140 zum Einführen mit nur geringem Kraftaufwand, bis schließlich die elastische Rückstellkraft der wellenartigen Struktur 140 zu einem haftenden Kontakt mit der Zitze 180 führt, sodass ein zuverlässiges Anhaften des Melkbechereinsatzes 100 und damit des sprechenden Melkbechers gewährleistet ist. D. h., in dieser Stellung, die auch Betriebsstellung bezeichnet wird, in der die wellenartige Struktur 140 nach "unten" verformt ist (nicht gezeigt), ist eine relativ hohe Haftkraft wirksam, die in Verbindung mit einen Kontaktbereich (nicht gezeigt) des Schlauchbereichs 110 dazu führt, dass eine unerwünschte vorzeitige Ablösung des Melkbechers von der Zitze 180 im Wesentlichen vermieden wird, ohne dass eine Abschnürung der Zitze erfolgt. Dadurch wird der Vorgang des Ansetzens vereinfacht und die allgemeine Haftung des Melkbechers während des Melkvorgangs ist höher, wobei, wie bereits erwähnt, eine negative Beeinflussung, etwa durch Abschnürung, nahezu vermieden wird, wie dies ansonsten bei konventionellen Zitzengummis mit passendem oder relativ knappem Durchmesser der Fall ist.

Wenn während des Melkens gewisse Unterdruckspitzen unter der Zitze auftreten, wie dies bereits zuvor erläutert ist, dann ermöglicht die wellenartige Struktur 140 bereichsweise eine geringe Ablösung von der Zitze 180, ohne dabei jedoch die Haftung an der Zitze 180 so zu reduzieren, dass ein Becherabfall erfolgt. Es werden durch diese bereichsweise erfolgende Ablösung ein oder mehrere Strömungskanäle zwischen dem Innenraum des Melkbechereinsatzes 100 und der umgebenden Atmosphäre temporär geschaffen. Durch diese Ventilwirkung können daher Unterdruckspitzen deutlich reduziert werden, sodass sich ein zuverlässiger und tierschonender Melkvorgang durchführen lässt. Ein hohes Kopfvakuum kann zu einem Anschwellen der Zitze führen, sodass die Zitze nahezu wie ein Stöpsel wirkt und damit ein weiteres Melken des betreffenden Euterbereichs erschwert wird, wodurch es in der Folge zu Eutergesundheitsproblemen kommen kann. Beispielsweise kann dies zu einem vermehrten Restmilchanteil in dem betroffenen Euterbereich führen, wodurch wiederum eine Beeinträchtigung der Eutergesundheit und/oder eine Ertragseinbuße hervorgerufen werden können.

Figur 2A zeigt eine perspektivische Ansicht eines Melkbechereinsatzes 200 gemäß weiteren Ausführungsformen der vorliegenden Erfindung. Der Melkbechereinsatz 200 weist, in ähnlicher Weise zu dem zuvor beschriebenen Melkbechereinsatz 100, einen Schlauchbereich 210 und einen dazu in Längsrichtung des Schlauchbereichs 210 angrenzenden Kopfbereich 220 auf. Der Kopfbereich 220 weist einen Rand 221 auf und ist ferner ausgebildet, an einer Melkbecherhülse (nicht gezeigt) befestigt zu werden, wie dies auch bereits zuvor in Verbindung mit den Figuren 1A-1F erläutert ist. Des Weiteren ist in dem Kopfbereich 220 ein Ringbereich 230 vorgesehen, der wiederum eine wellenartige Struktur 240 mit Wellenbergen 241 und Wellentälern 242 beinhaltet. Im Hinblick auf die Begriffe wellenartige Struktur, Wellenberge und Wellentäler sei auf die vorhergehenden Erläuterungen verwiesen. Der Ringbereich 230 in Verbindung mit der wellenartigen Struktur 240 begrenzt eine Zitzeneinführöffnung 250, die zur Aufnahme einer Zitze dient.

In der dargestellten Ausführungsform ist die wellenartige Struktur 240 so gestaltet, dass die Wellentäler 242 mit größer werdendem radialen Abstand von der Öffnung 250 eine kleinere Erstreckung in Umfangsrichtung haben. D. h., im Gegensatz zu der wellenartigen Struktur 140 der vorhergehenden Ausführungsformen werden die Wellentäler 242 nach außen hin in ihrer Umfangserstreckung kleiner und führen damit dazu, dass bei zunehmendem radialen Abstand die Wellenberge 241 in Umfangsrichtung stärker zunehmen als dies für die Gestaltung der wellenartigen Strukturen 140 der zuvor beschriebenen Ausführungsformen der Fall ist. Der Grad der "Zuspitzung" der Wellentäler 242 mit zunehmendem radialen Abstand zu der Öffnung 250 kann dabei nach Bedarf konstruktiv bei der Herstellung festgelegt werden, um damit beispielsweise die Steifigkeit der wellenartigen Struktur 240 und damit des Ringbereichs 230 mit zunehmendem radialen Abstand zu erhöhen. Damit kann ein höheres Maß an Haftkraft bei kleineren Zitzen oder bei Verwendung einer weicheren Polymermischung des Melkbechereinsatzes erreicht werden, wenn etwa der betrachtete Zitzendurchmesser für den Durchmesser der Öffnung 250 eines konventionellen Melkbechereinsatzes zu klein wäre. Aufgrund der wellenartigen Struktur 240 ist jedoch in diesem Falle die Öffnung 250 für die betrachtete Zitze dennoch geeignet, da sich bei einem entsprechenden Aufschieben des Melkbechereinsatzes auch für die relativ kleine Zitze ein zuverlässiger Halt ergibt.

Figur 2B zeigt eine Draufsicht des Melkbechereinsatzes 200, wobei hier deutlicher zu erkennen ist, dass die wellenartige Struktur 240 mit den Wellenbergen 241 und den Wellentälern 242 so gestaltet ist, dass die entsprechende Erstreckung oder Länge der Wellenberge 241 und der Wellentäler 242 entlang einer Umfangsrichtung 260 der Öffnung 250 sich mit zunehmendem radialen Abstand 240A von der Öffnung 250 verändert. In der gezeigten Ausführungsform heißt das, dass die Erstreckung in Umfangsrichtung der Wellentäler 242 mit größer werdendem Abstand 240A kleiner wird. Ausgehend von der Öffnung 250 nach außen weisend reduziert sich also die entsprechende Erstreckung in Umfangsrichtung, während andererseits demgemäß die Erstreckung in Umfangsrichtung der Wellenberge 241 größer wird und dabei "schneller" zunimmt als dies für die zuvor beschriebenen Ausführungsformen der Fall ist, in denen beispielsweise die Erstreckung in Umfangsrichtung der Wellentäler bei zunehmendem radialen Abstand in etwa gleich bleibt. Durch die Einstellung des Grades der Verjüngung der Wellentäler 242 bei ansonsten gleich bleibenden Parametern, etwa Materialstärke, Materialart, und dergleichen, kann somit einerseits die Größe der Auflagefläche und andererseits auch die Nachgiebigkeit der wellenartigen Struktur 240 in Abhängigkeit vom radialen Abstand 240A konstruktiv festgelegt werden.

Figur 2C zeigt schematisch eine Schnittansicht des Melkbechereinsatzes 200. Wie gezeigt, ist der Kopfbereich 220 mit einer Aufnahme 222 versehen, die geeignet gestaltet ist, einen Oberteil einer Melkbecherhülse (nicht gezeigt) zu umfassen, sodass eine zuverlässige mechanische Verbindung zwischen Melkbecherhülse und dem Melkbechereinsatz 200 gewährleistet ist. Wie ferner gezeigt ist, ist der Ringbereich 230 mit der wellenartigen Struktur 240 so gestaltet, dass die Maxima der Wellenberge 241 nahezu plan sind zu einer unstrukturierten Oberfläche 236 des Ringbereichs 230. D.h., in dieser Variante ergibt sich keine "Einsenkung" der wellenartigen Struktur 240, die durch eine nach innen gerichtete Neigung hervorgerufen würde, wie dies etwa durch die Neigung 135 des Ringbereichs 130 in einigen zuvor beschriebenen Ausführungsformen (siehe Figur 1D) der Fall ist.

Wie ferner gezeigt ist, ist am Randbereich der Öffnung 250 (siehe Figur 2B) eine Erstreckung 242L der Wellentäler 242 in Umfangsrichtung 260 (siehe Figur 2B) größer als eine entsprechende Erstreckung 241L der Wellenberge 241, wobei sich diese Relation mit zunehmendem radialen Abstand von der Öffnung 250 rasch ändert und umkehrt, wie zuvor erläutert ist. Ferner sind erfindungsgemäß die Wandstärken der Wellenberge 241, etwa in einem Wellenbergabschnitt 241A, und der Wellentäler 242, etwa in einem Wellentalabschnitt 242A, unterschiedlich.

Wie zuvor in Verbindung mit den Figuren 1A-1F ausgeführt ist, ist es in einigen Ausführungsformen vorteilhaft, die Wandstärke der Wellenberge größer zu wählen als die Wandstärke der Wellentäler, um damit einerseits eine zuverlässige Kontaktfläche zu schaffen und andererseits ein hohes Maß an Verformbarkeit zu gewährleisten.

Ferner sind auch in diesen Ausführungsbeispielen eine Oberseite 240O und eine Unterseite 240U der wellenförmingen Struktur 240 so gestaltet, dass die Unterseite 240U an dem Abschnitt 241A des Wellenbergs 241 einen maximalen Abstand zu dem Schlauchbereich 210 hat und die Unterseite 240U an dem Abschnitt 242A des Wellentals 242 einen minimalen Abstand zu dem Schlauchbereich 210 hat. Die Unterseite 240U und auch die Oberseite 240O haben somit in Seitenansicht eine schlangenlinienförmige Gestalt, wie dies auch in Verbindung mit dem Melkbeschereinsatz 100 zuvor beschrieben ist.

Generell ist anzumerken, dass alle gestalterischen Maßnahmen, die in Verbindung mit den Ausführungsformen der Figuren 1A bis 1F beschrieben sind, auch in gleicher Weise auf die Ausführungsformen angewendet werden können, wie sie im Rahmen der Figuren 2A bis 2C beschrieben sind.

Es gilt also: die vorliegende Erfindung beruht auf dem Konzept, dass die Verformbarkeit eines Melkbechereinsatzes im Bereich der Zitzeneinführöffnung verbessert werden kann, indem eine wellenartige Struktur als integraler Bestandteil des Melkbechereinsatzes vorgesehen wird. Dadurch steht eine große Kontaktfläche zum Anliegen an dem betreffenden Zitzenbereich bereit und es ist eine verbesserte Anpassbarkeit an Zitzen unterschiedliche Größe aufgrund des balgartigen oder schlangenlinienförmigen Verlaufs der wellenartigen Struktur entlang der Umfangsrichtung der Öffnung erreichbar, ohne dass die Gefahr eines Melkbecherabfalls zunimmt und gleichzeitig nachteilige Auswirkungen auf das Gewebe der Zitze hervorgerufen werden. Ferner ist es möglich, den gesamten Melkbechereinsatz aus einer weicheren Materialmischung, etwa einer weicheren Polymermischung, herzustellen, ohne damit die konventioneller Weise damit einhergehenden Nachteile einer geringeren Haftkraft hervorzurufen.

## Patentansprüche

1. Elastischer Melkbechereinsatz (100) zur Aufnahme einer Zitze, mit einem Schlauchbereich (110), einem in Längsrichtung des Schlauchbereichs angrenzenden Kopfbereich (120), der zur Befestigung an einer Melkbecherhülse ausgebildet und mit einer Zitzeneinführöffnung (150) versehen ist, und einem die Zitzeneinführöffnung begrenzenden, in der Betriebsstellung als Zitzenkontaktfläche wirkenden Ringbereich (130), der entlang des Umfangs der Zitzeneinführöffnung eine wellenartige Struktur (140) mit einer dem Schlauchbereich zugewandten Unterseite (140U) und einer von dem Schlauchbereich abgewandten Oberseite (140O) aufweist, wobei der Schlauchbereich, der Kopfbereich und der Ringbereich einschließlich der wellenartigen Struktur in Form eines einzigen Materialstücks ausgebildet sind und ein Wellenberg (141) der wellenartigen Struktur einen Wellenbergabschnitt (141A) in Umfangsrichtung der Zitzeneinführöffnung enthält, an dem die Unterseite des Wellenbergabschnitts einen maximalen Abstand zu dem Schlauchbereich hat, und ein Wellental (142) der wellenartigen Struktur einen Wellentalabschnitt (142A) enthält, an dem die Unterseite des Wellentalabschnitts einen zu dem maximalen Abstand verschiedenen minimalen Abstand zu dem Schlauchbereich hat, **dadurch gekennzeichnet, dass** der Wellenbergabschnitt (141A) und der Wellentalabschnitt (142A) unterschiedliche Wandstärkei (141T, 142T) haben.

2. Elastischer Melkbechereinsatz nach Anspruch 1, wobei eine radiale Erstreckung der wellenartigen Struktur in dem Ringbereich ausgehend vom Rand der Zitzeneinführöffnung zahlenmäßig größer ist als ein Radius der Zitzeneinführöffnung.

3. Elastischer Melkbechereinsatz nach Anspruch 1, wobei der Wellenbergabschnitt eine größere Wandstärke als der Wellentalabschnitt hat.

4. Elastischer Melkbechereinsatz nach Anspruch 1 bis 3, wobei am Rand der Zitzeneinführöffnung eine Erstreckungslänge der Wellentäler größer ist als eine Erstreckungslänge der Wellenberge.

5. Elastischer Melkbechereinsatz nach einem der Ansprüche 1 bis 4, wobei die Erstreckung der Wellentäler in Umfangsrichtung mit zunehmendem Abstand von der Zitzeneinführöffnung im Wesentlichen gleich bleibt.

6. Elastischer Melkbechereinsatz nach einem der Ansprüche 1 bis 5, wobei in der wellenartigen Struktur mindestens drei Wellentäler vorgesehen sind.

7. Elastischer Melkbechereinsatz nach Anspruch 6, wobei sechs oder mehr Wellentäler vorgesehen sind.

8. Elastischer Melkbechereinsatz nach einem der Ansprüche 1 bis 7, wobei der Ringbereich ausgehend von einem Rand des Kopfbereichs zu der Zitzeneinführöffnung hin in Richtung zu dem Schlauchbereich geneigt ist.

9. Elastischer Melkbechereinsatz nach einem der Ansprüche 1 bis 8, wobei die Zitzeneinführöffnung geeignet derart bemessen ist, dass eine Zitze eines großen Milchtieres, insbesondere eines Rindes oder eines Büffels, einführbar ist.

10. Elastischer Melkbechereinsatz nach einem der Ansprüche 1 bis 8, wobei die Zitzeneinführöffnung geeignet derart bemessen ist, dass eine Zitze eines kleinen Milchtieres, insbesondere eines Schafs oder einer Ziege, einführbar ist.

## Claims

1. Elastic teat cup liner (100) for holding a teat, comprising
a hose region (110),
a top region (120) adjoining in the longitudinal direction of the hose region, which is configured for attachment to a teat cup sleeve and is provided with a teat insertion opening (150), and
an annular region (130) delimiting the teat insertion opening and acting as a teat contact surface in the operating position and having an undulating structure (140) along the circumference of the teat insertion opening with an underside (140U) facing the hose region and an upper side (140O) facing away from the hose region, wherein the hose region, the top region and the annular region including the undulating structure are formed in the form of a single piece of material, and a wave crest (141) of the undulating structure includes a wave crest section (141A) in the circumferential direction of the teat insertion opening, at which the underside of the wave crest section has a maximum distance from the hose region, and a wave trough (142) of the undulating structure includes a wave trough section (142A), at which the underside of the wave trough section has a minimum distance from the hose region which is different from the maximum distance,
**characterized in that**
the wave crest section (141A) and the wave trough section (142A) have different wall thicknesses.

2. Elastic teat cup liner according to claim 1, wherein a radial extension of the undulating structure in the annular region starting from the edge of the teat insertion opening is numerically greater than a radius of the teat insertion opening.

3. Elastic teat cup liner according to claim 1, wherein the wave crest section has a greater wall thickness than the wave trough section.

4. Elastic teat cup liner according to claims 1 to 3, wherein at the edge of the teat insertion opening an extension length of the wave troughs is greater than an extension length of the wave crests.

5. Elastic teat cup liner according to any one of claims 1 to 4, wherein the extension of the wave troughs in the circumferential direction remains substantially the same with increasing distance from the teat insertion opening.

6. Elastic teat cup liner according to any one of claims 1 to 5, wherein at least three wave troughs are provided in the undulating structure.

7. Elastic teat cup liner according to claim 6, wherein six or more wave troughs are provided.

8. Elastic teat cup liner according to any one of claims 1 to 7, wherein the annular region is inclined from an edge of the top region towards the teat insertion opening in the direction of the hose region.

9. Elastic teat cup liner according to any one of claims 1 to 8, wherein the teat insertion opening is suitably dimensioned so as to enable insertion of a teat of a large dairy animal, in particular a cow or a buffalo.

10. Elastic teat cup liner according to any one of claims 1 to 8, wherein the teat insertion opening is suitably dimensioned so as to enable insertion of a teat of a small dairy animal, in particular a sheep or a goat.

## Revendications

1. Insert de gobelet trayeur élastique (100) destiné à recevoir un trayon, comprenant une zone de tuyau (110), une zone de tête (120) adjacente à la zone de tuyau dans le sens de la longueur, qui est conçue pour être fixée à un manchon de gobelet trayeur et qui est pourvue d'une ouverture d'insertion de trayon (150) et d'une zone d'insertion de trayon qui délimite l'ouverture d'insertion de trayon, agissant en tant que surface de contact du trayon dans la position de fonctionnement, une zone annulaire (130) présente, le long de la périphérie de l'ouverture d'introduction du trayon, une structure ondulée (140) avec une face inférieure (140U) faisant face à la zone de tuyau et une face supérieure (1400) opposée à la zone de tuyau, la zone de tuyau, la partie de tête et la partie annulaire comprenant la structure ondulée sont formées en une seule pièce de matériau et une crête d'ondulation (141) de la structure ondulée comprend une partie de crête d'ondulation (141A) dans la direction circonférentielle de l'ouverture d'insertion du trayon, où la face inférieure de la partie de crête d'ondulation est à une distance maximale de la partie de tuyau, et un creux d'ondulation (142) de la structure ondulée comprend une partie de creux d'ondulation (142A) au niveau de laquelle le côté inférieur de la partie de creux d'ondulation présente une distance minimale par rapport à la zone de tuyau différente de la distance maximale, **caractérisé en ce que** la partie de crête d'ondulation (141A) et la partie de creux d'ondulation (142A) présentent une épaisseur de paroi différente (141T, 142T).

2. Insert de gobelet trayeur élastique selon la revendication 1, dans lequel une extension radiale de la structure ondulée dans la zone annulaire à partir du bord de l'ouverture d'insertion du trayon est supérieure en nombre à un rayon de l'ouverture d'insertion du trayon.

3. Insert de gobelet trayeur élastique selon la revendication 1, dans lequel la partie de crête d'ondulation a une épaisseur de paroi supérieure à la partie de creux d'ondulation.

4. Insert de gobelet trayeur élastique selon les revendications 1 à 3, dans lequel, au bord de l'ouverture d'introduction du trayon, une longueur d'extension des creux des ondulations est supérieure à une longueur d'extension des crêtes des ondulations.

5. Insert de gobelet trayeur élastique selon l'une quelconque des revendications 1 à 4, dans lequel l'étendue des creux d'ondulation dans la direction circonférentielle reste sensiblement la même à mesure que la distance par rapport à l'ouverture d'insertion du trayon augmente.

6. Insert de gobelet trayeur élastique selon l'une quelconque des revendications 1 à 5, dans lequel au moins trois creux d'ondulation sont prévus dans la structure ondulée.

7. Insert de gobelet trayeur élastique selon la revendication 6, dans lequel six creux d'ondulation ou plus sont prévus.

8. Insert de gobelet trayeur élastique selon l'une quelconque des revendications 1 à 7, dans lequel la partie annulaire est inclinée vers la partie tubulaire en partant d'un bord de la partie de tête vers l'ouverture d'insertion du trayon.

9. Insert de gobelet trayeur élastique selon l'une quelconque des revendications 1 à 8, dans lequel l'ouverture d'introduction du trayon est dimensionnée de manière appropriée pour permettre l'introduction d'un trayon d'un animal laitier de grande taille, en particulier d'une vache ou d'une bufflone.

10. Insert de gobelet trayeur élastique selon l'une quelconque des revendications 1 à 8, dans lequel l'ouverture d'introduction du trayon est dimensionnée de manière appropriée pour permettre l'introduction d'un trayon d'un petit animal laitier, en particulier d'une brebis ou d'une chèvre.
